# EUROPEAN PATENT SPECIFICATION

(11) **EP 0 508 732 B1**
(45) Date of publication and mention of the grant of the patent: **08.11.1995**
(21) Application number: 92303089.4
(22) Date of filing: 08.04.1992
(51) Int. Cl.: B29C 45/00

(54) **Injection molding method**
Spritzgiessverfahren
Procédé d'injection

(30) Priority: 09.04.1991 JP 76337/91
(43) Date of publication of application: 14.10.1992
(73) Proprietor: POLYPLASTICS CO. LTD., Chuo-Ku Osaka-shi Osaka 541 (JP)
(72) Inventor: Furugohri, Yoshihiro, Shimizu-shi, Shizuoka (JP); Kumagai, Yukihisa, Ihara-gun, Shizuoka (JP)
(74) Representative: W.P. THOMPSON & CO.

(56) References cited:
- EP-A- 0 362 648
- US-A- 2 191 703
- US-A- 4 399 093
- PATENT ABSTRACTS OF JAPAN vol. 14, no. 495 (M-1041) 29 October 1990 & JP-A-22 02 414 (NISSEI PLASTICS)
- PATENT ABSTRACTS OF JAPAN vol. 6, no. 83 (M-130)(961) 21 May 1982 & JP-A-57 022 031 (FUJI DENKI KAGAKU)

## Description

The present invention relates to an injection molding method for a thermoplastic resin according to the precharacterising part of claim 1. More particularly, the present invention is concerned with an injection molding method which can remarkably improve she strength around a weld of a molded article as opposed to the conventional method which inherently gives rise to a weld having a very low strength, and can improve the appearance of the weld, and an injection molded article having an improved weld strength, etc.

Reference is first made to the drawings of this specification:

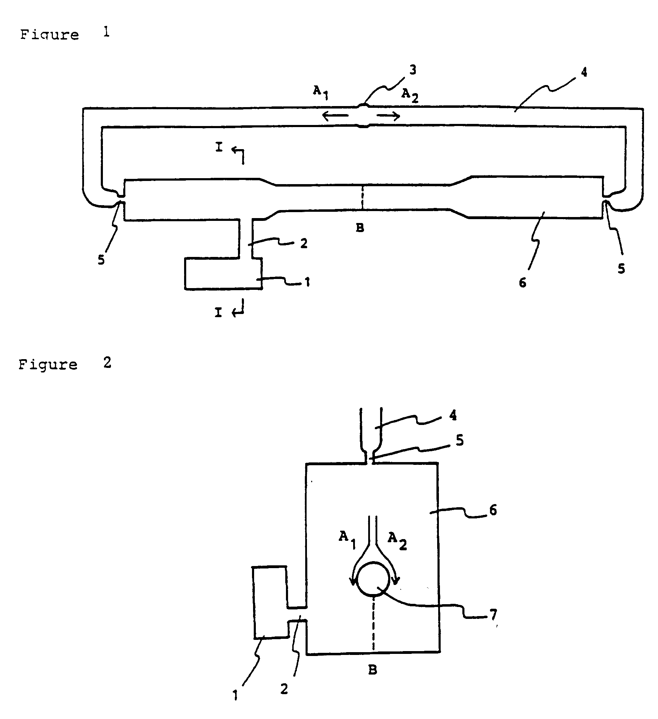

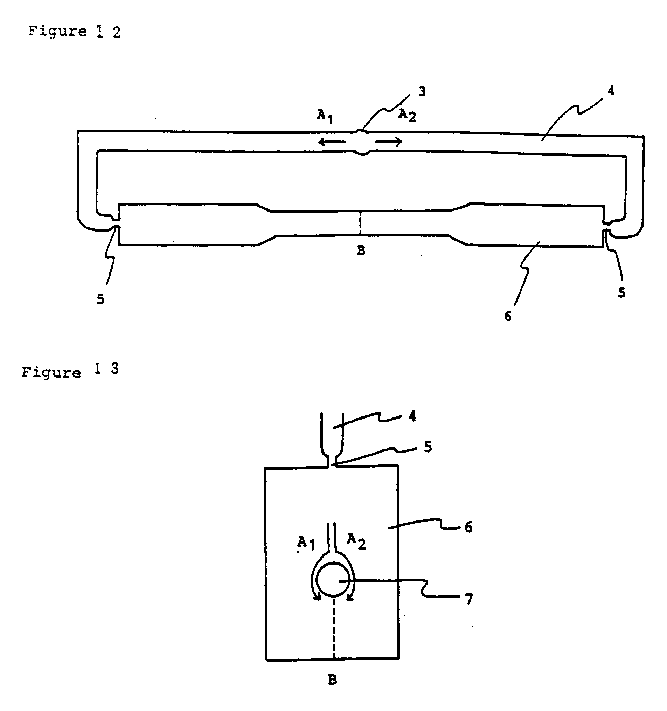

Fig. 1 is a schematic plan view of one embodiment of the mold of the present invention wherein a resin well is provided on a typical mold (molded article) shown in Fig. 12 which gives rise to a weld.
Fig. 2 is a schematic plan view of one embodiment of the mold of the present invention wherein a resin well is provided on a typical mold (molded article) shown in Fig. 13 which gives rise to a weld.

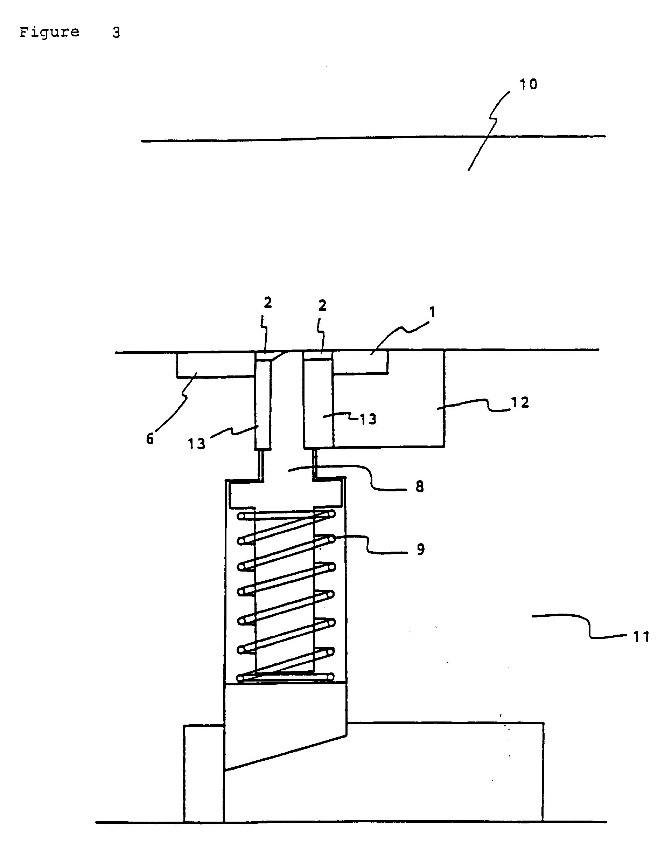

Fig. 3 is a schematic cross-sectional view of one embodiment of a structure of a valve to be provided at the inlet of the resin well, and corresponds to a cross-section taken along line I-I of Fig. 1 when the valve is provided.
Fig. 4 is a schematic diagram of a principal part of a mold showing the process of filling a resin in the case where a valve is provided at the inlet of the resin well of the mold shown in Fig. 1 and molding is conducted while controlling the pouring of the resin in the resin well. In this figure and Figs. 5 to 7, X represents a closed state of the valve, and Y represents an opened state of the valve.
Fig. 5 is a schematic diagram of a principal part of a mold showing a later stage in the process of filling a resin in the case where a valve is provided at the inlet of the resin well of the mold shown in Fig. 1 and molding is conducted while controlling the pouring of the resin in the resin well.

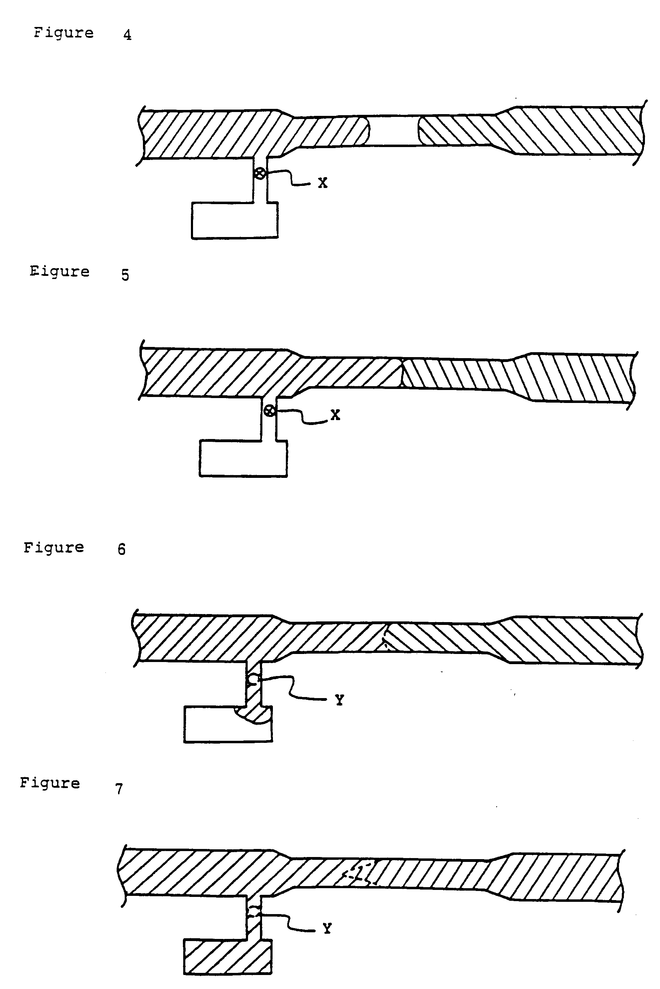

Fig. 6 is a schematic diagram of a principal part of a mold showing a still later stage in the process of filling a resin in the case where a valve is provided at the inlet of the resin well of the mold shown in Fig. 1 and molding is conducted while controlling the pouring of the resin in the resin well. In the drawing, X represents a closed state of the valve, and Y represents an opened state of the valve.
Fig. 7 is a schematic diagram of a principal part of a mold showing an even later stage in the process of filling a resin in the case where a valve is provided at the inlet of the resin well of the mold shown in Fig. 1 and molding is conducted while controlling the pouring of the resin in the resin well.

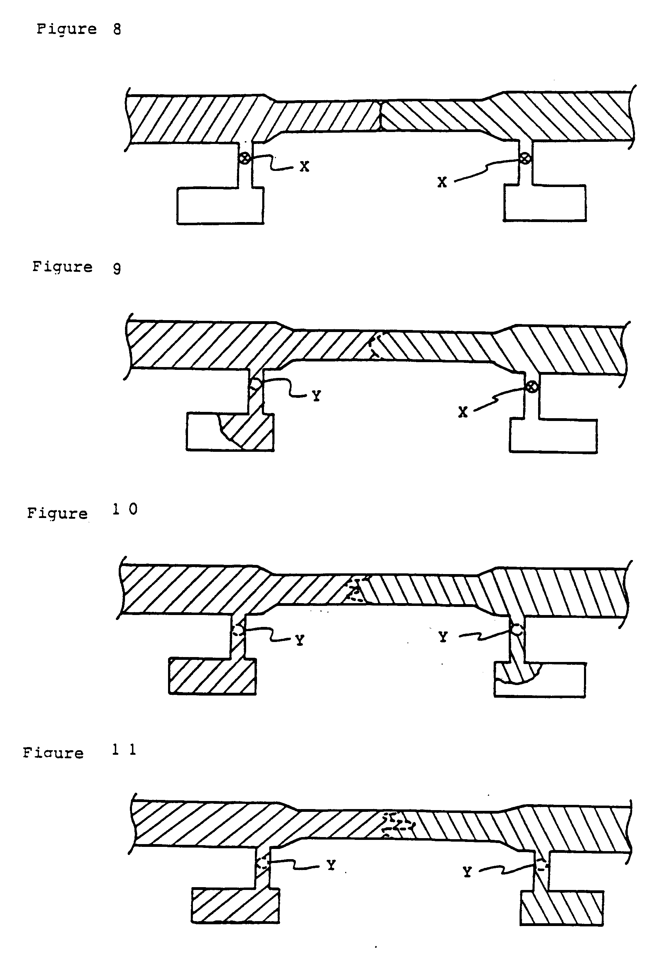

Fig. 8 is a schematic diagram of a principal part of a mold showing the process of filling a resin in the case where two resin wells each provided with a valve at the inlet are provided on the mold shown in Fig. 1 and molding is conducted while controlling alternate pouring of the resin in each resin well. In this figure and Figs. 9 to 11, X represents a closed state of each valve, and Y represents an opened state of each valve.
Fig. 9 is a schematic diagram of a principal part of a mold showing a later stage in the process of filling a resin in the case where two resin wells each provided with a valve at the inlet are provided on the mold shown in Fig. 1 and molding is conducted while controlling alternate pouring of the resin in each resin well.
Fig. 10 is a schematic diagram of a principal part of a mold showing a still later stage in the process of filling a resin in the case where two resin wells each provided with a valve at the inlet are provided on the mold shown in Fig. 1 and molding is conducted while controlling alternate pouring of the resin in each resin well.
Fig. 11 is a schematic diagram of a principal part of a mold showing an even later stage in the process of filling a resin in the case where two resin wells each provided with a valve at the inlet are provided on the mold shown in Fig. 1 and molding is conducted while controlling alternate pouring of the resin in each resin well.
Fig. 12 is a schematic plan view of a typical known mold which gives rise to a weld.
Fig. 13 is a schematic plan view of a further typical known mold which also gives rise to a weld.

The following reference numerals are used on the drawings:
- 1:: resin well,
- 2:: inlet of resin well,
- 3:: sprue,
- 4:: runner,
- 5:: gate,
- 6:: cavity,
- 7:: core,
- 8:: piston valve,
- 9:: spring,
- 10:: fixed mold,
- 11:: movable mold,
- 12:: block (insert) for resin well, and
- 13:: block (insert) for inlet of resin well (piston valve).

In the mold shown in Fig. 12, when a molten resin is injected and filled into a single cavity 6 through a plurality of gates 5, 5, a plurality of resin streams occur within the cavity and a weld forms at a position B where the resin streams are united and fused. Even when a molten resin is filled into the cavity through a single gate, if the resin is separated into streams by a core 7 or the like provided within the cavity as shown in Fig. 13, a weld forms at a position B where the separated resin streams are united into a single stream. Further, also when the molded article has a portion having an uneven thickness, the molten resin injected and filled into the cavity is separated into streams due to a difference in the filling rate of the resin between the portion having a larger thickness and the portion having a smaller thickness, so that a weld often forms at a portion where the separated resin streams are united into a single stream. In many cases, the weld of the molded article is formed due to a combination of the various factors described above, so that it is very difficult to produce a practical molded article having a complicated shape but being free from a weld. Such a weld poses a very serious problem that not only a linear pattern called a weld mark occurs to thereby deteriorate the appearance, but also the strength of the formed molded article is much lower than the inherent strength of the resin, because the molten resin streams are merely united and fused with each other and fail to achieve homogeneous mixing of the resin.

In order to solve the problem of the lowering in the strength of the weld by molding, JP-A-71459/1973 discloses a molding process which comprises filling a resin in a mold provided with a resin well at a position where a weld occurs and pushing back the resin contained in the resin well into the mold, thereby improving the strength of the weld, and Japanese Patent Laid-Open No. 202414/1990 discloses a molding process which comprises injecting and filling a resin into a cavity through a plurality of gates provided with a valve to form resin streams, uniting the resin streams and then operating the valve to give rise to a difference in the resin filling pressure to disturb the weld, thereby improving the strength of the weld.

In these processes, however, it is difficult to disturb the orientation of the resin or filler at the weld through the occurrence of a sufficient resin stream there, so that no satisfactory improvement in the strength of the weld can be attained.

EP-A-0362648 describes an injection molding method in which two melt flows coincide within the mold hollow space and a joint line is formed, the flow direction of at least one of the flows is changed in the region of the joint line so that the joint line surface is curved.

US-A-4399093 describes a method of molding an element from liquid synthetic resin wherein liquid resin is introduced into a mold cavity through a first gate and liquid resin is concurrently introduced into the mold cavity through a second gate with portions of the resin received through each of the gates meeting at a joint interface. The resin in the second gate is caused to solidify sooner than the resin in the first gate so that the leading surface of the resin received through the first gate projects into a leading surface portion of the resin received through the second gate during the mold packing operation to provide an enlarged weld line area and improved strength in the joint.

The present inventors have made intensive studies with a view to solving the above-described problem and producing a molded article having an improved weld strength and, as a result, have found a method of efficiently improving a weld strength and a mold to be used for this purpose wherein the resin is caused to migrate while the resin maintains the fluidity in the cavity after the formation of a weld, thereby disturbing the orientation of the resin or filler at the weld.

Accordingly and taking the disclosure of EP-A-0362648 as the most relevant prior art, the present invention provides an injection molding method for a thermoplastic resin, in which a mold provided with a resin well protruding from a molded article cavity or a runner on at least one of separated resin passages starting from a point where an injected molten filling resin is separated into streams and terminating at a weld formed by the union of the separated resin streams is used, and a resin is poured into the resin well after the formation of the weld through the feed of the molten resin into the molded article cavity to cause the migration of the resin at the weld, thus forcing the resin on one side of the weld into the resin on the other side of the weld to strengthen the weld, characterised in that the resin well is provided with a valve at its inlet and, after the molten resin is fed into the molded article cavity with the valve closed, the valve is opened to pour the resin into the resin well.

The mold and molding method according to the present invention will now be described in more detail with reference to the attached drawings.

Figs. 1 and 2 show embodiments of a mold used according to the invention while taking a mold, and molded article, shown in Fig. 12 and a mold, and molded article, shown in Fig. 13, respectively, as examples of typical molds liable to give rise to a weld. In these embodiments, in order to improve the weld strength, etc., according to the present invention, a resin well protruding from a molded article cavity or sprue is provided at a predetermined position, that is, on at least one of resin passages starting from a point where an injected molten filling resin is separated into streams and terminating at a weld formed by the union of the separated resin streams. It is a matter of course that most of the practical molds and molded articles rarely have such a simple form, and the manner of filling the molten resin into the cavity, the weld formation process, etc., are more complicated. Fundamentally, however, the constitution of the mold and the molding method may be as has been described above and will be described further below.

In molding a molded article through the use of the above-described mold, when no resin well is provided, that is, in the molds shown in Figs. 12 and 13, the injected molten filling resin is separated into resin streams A₁ and A₂ underneath a sprue 3 in the case of the mold shown in Fig. 12 and in front of a core 7 in the case of the mold shown in Fig. 13, and a weld is formed at a point B where the separated resin streams are united. In the above-described weld, the front ends of the two separated resin streams come into contact with each other and apparently adhere to each other, and the resin or filler contained in the resin orients with the weld therebetween. Thus the resin streams are not in a homogeneously mixed state, so that the strength becomes unfavorably low. Further, a line called weld line occurs, which deteriorates the appearance.

On the other hand, in the molding wherein use is made of molds as shown in Figs. 1 and 2 which are provided with a resin well 1 at a predetermined position according to the present invention, after the injected molten filling resin is separated into resin streams A₁ and A₂ and a weld is formed at a point B where these streams are united, a molten resin is further poured into the resin well 1 through the utilization of the injection pressure applied to the resin or the dwelling to give rise to a pressure difference between both sides of the weld, so that the resin on the side not provided with a resin well is forced into the resin on the side provided with the resin well to disturb the orientation, etc., of the resin or filler at the weld, which contributes to an improvement in the strength of the weld and makes the weld line unnoticeable.

In the above-described molding method, before a weld is formed by the filled molten resin, part of the resin often pours into the resin well depending upon the size of the inlet of the well, the viscosity of the molten resin, etc. In this case, however, the resin well is not completely filled with this resin, and a space into which the resin is poured after the formation of a weld is left. Therefore, fundamentally, there occurs no problem as far as the fluidity is maintained. In this case, the weld is initially formed at a position deviated from the point B towards the resin well, and the migration of the resin occurs at the weld. In order to minimize the pouring of the resin into the resin well during the filling of the molten resin and to efficiently pour the resin into the resin well after the formation of the weld, it is generally preferred that the thickness of the inlet of the resin well be 0.2 to 0.7 times that of the thickness of the molded article.

When the inlet of the resin well is opened and the resin pours into the resin well during the filling of the molten resin, however, a lowering in the efficiency of the resin well is unavoidable.

Therefore, in order to allow the resin well to function more efficiently without fail, a valve is provided so that the pouring of the resin into the resin well is forcibly controlled. The valve, provided at the inlet of the resin well, is usually closed and may have such a structure that it spontaneously opens in response to the injection pressure or dwelling after the filling of the molten resin into the cavity. Alternatively, the valve may have such a structure that it can be forcibly opened and closed by a separately provided drive mechanism. In this case, a sensor capable of detecting the state of filling of the resin into the cavity may be provided within the mold or on the side of the molding machine so that the state of the filling of the resin into the cavity is detected by the sensor and the drive mechanism operates in response to the detected signal to open the valve. Alternatively, the time necessary for forming the weld may be previously measured so that the drive mechanism may operate after a predetermined period of time to open the valve. Fig. 3 is an embodiment of a structure in which the valve spontaneously opens in response to the pressure applied to the cavity. In this embodiment, a piston valve 8 having a diagonally cut top is pushed up through the utilization of a spring pressure or the like. The inlet of the resin well is closed during the filling of the resin into the cavity. When a pressure from the cavity after filling the resin into the cavity is applied to the diagonally cut portion, a component force which pushes down the piston valve occurs. When this component force exceeds the pushing force, the valve comes down, which causes the resin to be poured into the resin well. The valve having the above-described structure is very simple and useful from the viewpoint of the apparatus.

In the above-described embodiment wherein the valve opens in response to the pressure from the cavity, it is preferred to conduct setting in such a manner that the valve opens when a pressure of 30 to 500 kg/cm² is applied thereto. When the valve is opened and closed by means of a drive mechanism, it is possible to open the valve immediately before the formation of a weld as far as the resin is poured into the resin well also after the formation of the weld. Figs. 4 to 7 schematically show the state of filling of the resin with the elapse of the time in the case where molding is conducted while controlling the pouring of the resin into the resin well through the use of the mold provided with the above-described valve.

In the above-described method wherein a valve is provided and, after a molten resin is filled into the cavity with the valve closed, the valve is opened to pour the resin into the resin well, the migration and forcing of the resin at the weld are efficiently conducted, which renders this method useful particularly for improving the weld strength and the appearance.

In the mold according to the present invention, it is also possible to provide a plurality of resin wells. These wells can be provided by any of a method wherein these wells are provided on only one of the separated resin passages wherein the separated resin streams are united to form a weld, and a method wherein at least one well is provided on each of the separated resin passages. In particular, when use is made of a mold having a resin well provided by the latter method and the molding is conducted by a method which comprises, after the formation of a weld through the filling of a molten resin, pouring a resin into a resin well provided on one side of the weld and subsequently pouring the resin into a resin well provided on the other side, or a method wherein a resin is alternately poured into resin wells provided on both sides of the weld, the weld can be more efficiently disturbed by the alternate migration of the resin streams at the weld and the forcing of the resin, which renders this method very favorable for improving the weld strength and the appearance. Figs. 8 to 11 schematically show the state of filling and migration of the resin with the elapse of the time in the above-described molding procedure. In the mold used in the above-described molding, it is particularly useful to provide a valve at the inlet of each resin well so that alternate pouring of the resin into each resin well can be controlled.

In the mold of the present invention, the position and capacity of the resin well are related to the solidification speed of the resin, the volume of the molded article, the distance or volume between the resin separating point and the weld, and further the molding conditions such as resin temperature and injection pressure, and hence cannot be simply specified. However, what is important is to provide, after consideration of these factors, a resin well having a suitable capacity at a position where the migration and forcing of the resin at the weld efficiently occur after the formation of a weld. Generally speaking, the capacity of the resin well is preferably S × 5 (mm³) or more, still preferably S × 10 (mm³) or more, wherein S represents the sectional area (mm²) of the molded article along the weld.

Further, in the present invention, it is also possible to use the resin well as the cavity of another molded article.

Although the injection molding method according to the present invention can be applied to the injection molding of any of known thermoplastic resins, it can be particularly usefully applied to the injection molding of a thermoplastic resin which causes a remarkable lowering in the weld strength in the conventional molding method. For example, when a thermoplastic resin containing an inorganic filler, particularly a fibrous filler, is molded by the conventional method, the strength at the weld is much lower than that of the other portions, since the inorganic filler, particularly a fibrous filler, orients along both sides of the weld. By contrast, the molding method according to the present invention enables the strength of the weld to be sufficiently improved by virtue of efficient turbulence of the orientation at the weld. Among others, in the molding of a thermoplastic resin containing a fibrous filler having a mean fiber length of 3 mm or more, a strong orientation of the fiber is observed along the weld, so that a lowering in the weld strength occurs unfavorably. The molding method according to the present invention is useful particularly for the molding of such a resin composition. Also in the molding of a resin composition mainly composed of a crystalline thermoplastic resin, a similar problem is liable to occur due to the orientation of the crystalline resin along the weld. The molding method according to the present invention is very useful also for the molding of the resin composition of this type.

As is apparent from the foregoing description, in the injection molding of a thermoplastic resin which gives rise to a weld and provides only a very small strength according to the conventional method, the injection molding method according to the present invention wherein use is made of a mold provided with a resin well protruding from a molded article cavity or a runner on at least one of separated resin passages starting from a point where an injected molten filling resin is separated into streams and terminating at a weld formed by the union of the separated resin streams and a resin is poured into the resin well after the formation of a weld through the feed of a molten resin into the molded article cavity to cause the migration of the resin at the weld, thus forcing the resin on one side of the weld into the resin on the other side of the weld, has excellent features that not only the weld can be very efficiently strengthened but also the appearance is improved, which renders the present invention very valuable from the practical viewpoint.

### Examples

The present invention will now be described in more detail with reference to the following examples, though it is not limited to these examples only.

### Examples 1 to 3 and Comparative Examples 1 to 3

Resin compositions in the form of a pellet having a length of 12 mm, comprising a polypropylene resin (PP), a polyamide 66 resin (PA66) or a polyethylene terephthalate resin (PET) and 40% by weight of a long glass fiber (GF) were injection-molded though the use of an injection mold having a structure as shown in Fig. 1 and provided with a valve at the inlet of the resin well as shown in Fig. 3. In these resin compositions, the long glass fiber had substantially the same length as that of the pellet (mean fiber length: about 12 mm) and oriented in the direction parallel to the longitudinal direction of the pellet.

The constructions of main sections of the mold used herein and molding conditions were as follows.
- Dimension around weld of molded article:: 20 mm in width × 4 mm in thickness
- Resin well:: dimension = 40 mm × 15 mm × 15 mm in thickness configuration of inlet = 7 mm in width × 4 mm in thickness
- Valve:: regulated so that it is opened in response to a pressure of 300 kg/cm² from the cavity.
- Molding conditions:: injection pressure = 1400 kg/cm²
dwelling pressure = 440 kg/cm²
For comparison, a molded article was prepared in the same manner as that describe above, except that the molding was conducted with the inlet of the resin well of the mold shown in Fig. 1 being closed.

These molded articles were subjected to the measurement of tensile strength and elongation. Further, the appearance of the weld of the molded article (whether or not the weld line was present) was observed with the naked eye. The results are given in Table 1.

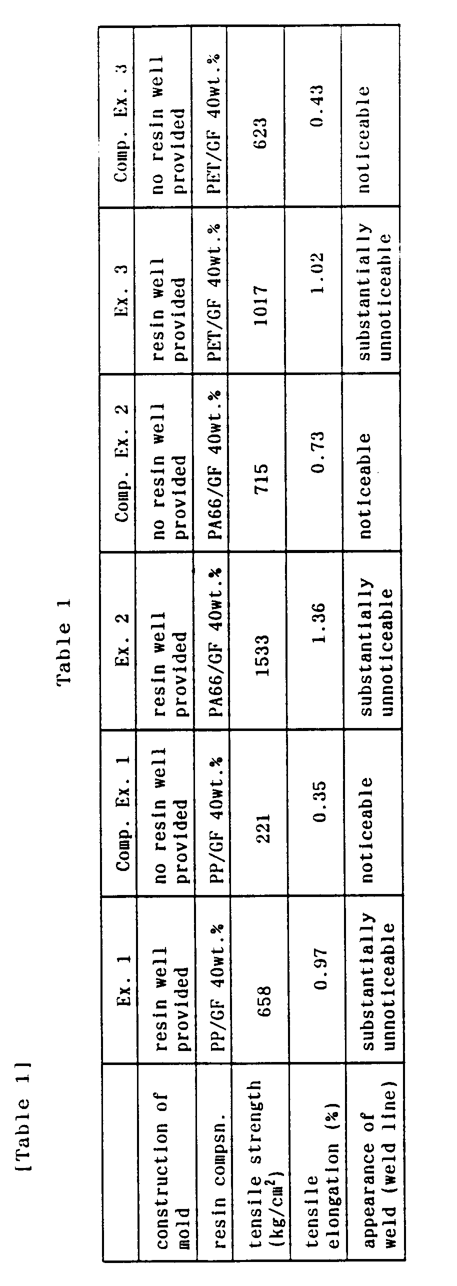

## Claims

1. An injection molding method for a thermoplastic resin, in which a mold provided with a resin well (1) protruding from a molded article cavity (6) or a runner (4) on at least one of separated resin passages starting from a point (3) where an injected molten filling resin is separated into streams (A₁, A₂) and terminating at a weld (B) formed by the union of the separated resin streams (A₁, A₂) is used, and a resin is poured into the resin well (1) after the formation of the weld (B) through the feed of the molten resin into the molded article cavity (6) to cause the migration of the resin at the weld (B), thus forcing the resin on one side of the weld (B) into the resin on the other side of the weld (B) to strengthen the weld (B), characterised in that the resin well (1) is provided with a valve (X, Y) at its inlet and, after the molten resin is fed into the molded article cavity (6) with the valve closed (X), the valve is opened (Y) to pour the resin into the resin well (1).

2. A method according to claim 1, in which the valve is closed (X) during the filling of the molten resin into the cavity (6), and is opened (Y) in response to a pressure applied from the cavity (6) after filling the molten resin into the cavity (6) to pour the resin into the resin well (1).

3. A method according to claim 2, in which the valve is opened (Y) in response to a pressure of 30 to 500 kg/cm² applied from the cavity.

4. A method according to claim 1, wherein the valve (8) is one which can be forcibly opened and closed by a separately provided drive mechanism, the molten resin is filled into the cavity (6) with the valve closed (X), the condition of filling of the molten resin into the molded article cavity (6) is detected by means of a sensor, and the drive mechanism is actuated in response to the detected signal to open (Y) the valve, thus causing the resin to pour into the resin well (1).

5. A method according to any preceding claim, in which the thermoplastic resin contains an inorganic filler.

6. A method according to claim 5, in which the inorganic filler is a fibrous filler.

7. A method according to claim 6, in which the fibrous filler is one with a mean fiber length of 3 mm or more.

8. A method according to any preceding claim, in which the thermoplastic resin is a crystalline thermoplastic resin.

## Patentansprüche

1. Spritzgußverfahren für ein thermoplastisches Harz, wobei eine Form verwendet wird, die mit einer Harz-Senke (1) ausgestattet ist, die aus einem Formgegenstandshohlraum (6) oder einer Zufuhrleitung (4) auf mindestens einem der getrennten Harzwege heraustritt, die von einem Punkt (3) ausgehen, an dem das eingespritzte geschmolzene Füllharz in Ströme (A₁, A₂) aufgetrennt wird, und die an einer Schweißstelle (B) enden, die durch das Zusammentreffen der getrennten Harzströme (A₁, A₂) gebildet ist, und wobei ein Harz in die Harz-Senke (1) nach der Bildung der Schweißstelle (B) gegossen wird, und zwar durch die weitere Zuspeisung des geschmolzenen Harzes in den Hohlraum (6) für den geformten Gegenstand, um die Migration des Harzes an der Schweißstelle (B) zu verursachen, wodurch das Harz auf einer Seite der Schweißstelle (B) in das Harz auf der anderen Seite der Schweißstelle (B) gezwungen wird, um die Schweißstelle (B) zu festigen,
dadurch **gekennzeichnet**, daß
die Harz-Senke (1) mit einem Ventil (X, Y) an ihrem Einlaß ausgestattet ist, und daß, nachdem das geschmolzene Harz in den Hohlraum (6) für den geformten Gegenstand bei geschlossenem Ventil (X) eingespeist ist, das Ventil geöffnet wird (Y), um das Harz in die Harz-Senke (1) zu gießen.

2. Verfahren gemäß Anspruch 1, wobei das Ventil beim Füllen des geschmolzenen Harzes in den Hohlraum (6) geschlossen (X) und in Reaktion auf einen Druck, der nach Einfüllen des geschmolzenen Harzes in den Hohlraum (6) aus dem Hohlraum (6) angewandt wird, geöffnet wird, um das Harz in die Harz-Senke (1) zu gießen.

3. Verfahren gemäß Anspruch 2, wobei das Ventil in Reaktion auf einen Druck von 30 bis 500 kg/cm², der aus dem Hohlraum angewandt wird, geöffnet wird (Y).

4. Verfahren gemäß Anspruch 1, worin das Ventil (8) eines ist, das durch einen getrennt vorgesehenen Antriebsmechanismus zwangsweise geöffnet und geschlossen werden kann, das geschmolzene Harz in den Hohlraum (6) bei geschlossenem Ventil (X) eingefüllt wird, der Füllzustand des geschmolzenen Harzes im Hohlraum (6) für den geformten Gegenstand mittels eines Sensor erfaßt und der Antriebsmechanismus in Reaktion auf das erfaßte Signal in Betrieb gesetzt werden, um das Ventil zu öffnen (Y), um dadurch das Harz zu veranlassen, daß es sich in die Harz-Senke (1) ergießt.

5. Verfahren gemäß jedem der vorhergehenden Ansprüche, worin das thermoplastische Harz einen anorganischen Füllstoff enthält.

6. Verfahren gemäß Anspruch 5, worin der anorganische Füllstoff ein faserförmiger Füllstoff ist.

7. Verfahren gemäß Anspruch 6, worin der faserförmige Füllstoff eine Durchschnittsfaserlänge von 3 mm oder mehr aufweist.

8. Verfahren gemäß jedem der vorhergehenden Ansprüche, worin das thermoplastische Harz ein kristallines thermoplastisches Harz ist.

## Revendications

1. Procédé de moulage par injection pour une résine thermoplastique, dans lequel est utilisé un moule pourvu d'un puits à résine (1) faisant saillie d'une cavité d'article moulé (6) ou d'un canal de coulée (4) sur au moins l'un des passages de résine séparés, partant d'un point (3) où une résine de remplissage en fusion, injectée, se sépare en courants (A₁, A₂) et se terminant par une soudure (B) formée par l'union des courants de résine (A₁, A₂) séparés, et une résine est versée dans le puits à résine (1) après la formation de la soudure (B) par l'amenée de la résine en fusion dans la cavité d'article moulé (6), pour provoquer la migration de la résine au niveau de la soudure (B), forçant ainsi la résine se trouvant d'un côté de la soudure (B) à entrer dans la résine se trouvant de l'autre côté de la soudure (B), pour renforcer la soudure (B), caractérisé en ce que le puits à résine (1) est pourvu d'une soupape (X, Y) à son entrée et, après amenée de la résine en fusion dans la cavité d'article moulé (6), soupape fermée (X), la soupape est ouverte (Y), pour verser la résine dans le puits à résine (1).

2. Procédé selon la revendication 1, dans lequel la soupape est fermée (X) durant le remplissage de la cavité (6) par la résine en fusion et est ouverte (Y) en réponse à une pression appliquée depuis la cavité (6), après avoir effectué le remplissage de la cavité (6) avec la résine en fusion, pour verser la résine dans le puits à résine (1).

3. Procédé selon la revendication 2, dans lequel la soupape est ouverte (Y) en réponse à une pression allant de 30 à 500 kg/cm², appliquée depuis la cavité.

4. Procédé selon la revendication 1, dans lequel la soupape (8) est une soupape qui peut être ouverte et fermée de manière forcée par un mécanisme d'entraînement prévu séparément, la cavité (6) est remplie par la résine en fusion, soupape fermée (X), l'état de remplissage de la cavité d'article moulé (6) par la résine en fusion est détecté au moyen d'un capteur, et le mécanisme d'entraînement est actionné en réponse au signal détecté pour ouvrir (Y) la soupape, forçant ainsi la résine à se verser dans le puits à résine (1).

5. Procédé selon l'une quelconque des revendications précédentes, dans lequel la résine thermoplastique contient un agent de remplissage non organique.

6. Procédé selon la revendication 5, dans lequel l'agent de remplissage non organique est un agent de remplissage fibreux.

7. Procédé selon la revendication 6, dans lequel l'agent de remplissage fibreux est un agent ayant une longueur de fibres moyenne de 3 mm ou plus.

8. Procédé selon l'une quelconque des revendications précédentes, dans lequel la résine thermoplastique est une résine thermoplastique cristalline.
